# EUROPEAN PATENT APPLICATION

(11) **EP 4 596 609 A1**
(43) Date of publication of application: **06.08.2025**
(21) Application number: 22960004.4
(22) Date of filing: 29.09.2022
(51) Int. Cl.: C08G 81/00, C08G 59/14, C08G 18/65

(54) **AMINOLYSABLE BENZOXAZINE RESIN CURED PRODUCT, AND PREPARATION METHOD AND AMINOLYSIS METHOD THEREFOR**

(71) Applicant: Swancor Innovation & Incubation Co., Ltd., Nantou City, Nantou County 540028 (TW)
(72) Inventor: WANG, Meng-wei, Nantou City, Nantou County, Taiwan 540028 (CN); HUANG, Yun-wen, Nantou City, Nantou County, Taiwan 540028 (CN)
(74) Representative: Ter Meer Steinmeister & Partner
(86) International application number: PCT/CN2022/122464
(87) International publication number: WO 2024/065363

(57) **Abstract**

The present disclosure provides an aminolysable benzoxazine resin cured product, and a preparation method and an aminolysis method therefor. The preparation method for an aminolysable benzoxazine resin cured product comprises a mixing step and a curing step, wherein in the mixing step, a benzoxazine resin and a phenolic compound are melted and uniformly mixed, so as to obtain a resin composition; and in the curing step, the resin composition is heated to a curing temperature so as to form an aminolysable benzoxazine resin cured product, the curing temperature being 160 to 230°C. Curing is performed by selecting a relatively low temperature, and the phenolic compound is added to promote the curing reaction, such that the prepared benzoxazine resin cured product has good material characteristics and chemical degradability, thereby solving the problem of the benzoxazine resin cured product being difficult to recycle, and achieving the goal of sustainable use.

## Description

### Technical Field

The present disclosure relates to a benzoxazine resin cured product, a manufacturing method and an aminolysis method thereof. More particularly, the present disclosure relates to an aminolyzable benzoxazine resin cured product, a manufacturing method and an aminolysis method thereof.

### Description of Related Art

The manufacturing of printed circuit board (PCB) and the disposal process of waste thereof generate carbon dioxide with an amount more than 100000 kg CO₂/10000 m² PCB, which is currently the largest one among the components of electronic products. Therefore, how to effectively recycle waste PCB to reduce carbon emissions has become a challenge for related industries. The current process of recycling waste PCB is to crush the PCB and then collect the metal materials therein for recycling and reusing. However, plastic materials (including insulating resins and glass fabrics) account for about 54.5% in PCB, and most of the resins in the plastic materials are stable thermosetting polymers, resulting in a recycling rate of the plastic materials being less than 3%. This is the main reason of difficultly and costly recycling, so methods such as incineration and landfill are still the primary methods for disposing of waste PCB nowadays.

Among various resin materials, benzoxazine (BZ) resin can be selected as one of the manufacturing materials for PCB. Benzoxazine resin is formed by the reaction of phenol, formaldehyde and primary amine compounds, and has a special six-membered heterocyclic structure. The chemical structure of benzoxazine resin can be adjusted by changing the types of phenol and amine, so as to make benzoxazine resin have a great flexibility for molecular design. In addition, the cured product of benzoxazine resin also has good mechanical properties, thermal properties, electrical properties and low surface energy, so benzoxazine resin is widely used in the fields such as PCB and electronic packaging materials.

In this regard, how to improve the degradability and recyclability of the benzoxazine resin cured product remains a problem to be solved.

### SUMMARY

The object of the present disclosure is to provide a benzoxazine resin cured product, wherein the chemical structure of benzoxazine resin is adjusted to make the cured product thereof be more easily degraded and recycled.

According to an embodiment of the present disclosure, a manufacturing method of an aminolyzable benzoxazine resin cured product includes performing a mixing step and performing a curing step. In the mixing step, a benzoxazine resin and a phenolic compound are melting and uniformly mixed, so as to obtain a resin composition, wherein the phenolic compound is configured for promoting the curing of the benzoxazine resin. In the curing step, the resin composition is heated to a curing temperature to form an aminolyzable benzoxazine resin cured product, wherein the curing temperature is 160°C to 230°C.

Therefore, according to the manufacturing method of the aminolyzable benzoxazine resin cured product of the present disclosure, the relatively low curing temperature for curing is selected and the phenolic compound is simultaneously added to promote the curing reaction. It makes the manufactured benzoxazine resin cured product have good material properties and chemical degradability, which solves the problem of difficult recycling of benzoxazine resin cured products and achieves the goal of sustainable utilization.

According to the aforementioned manufacturing method of the aminolyzable benzoxazine resin cured product, wherein a usage amount of the phenolic compound can be greater than or equals to 20 phr (parts per hundred parts of resin, calculated by mass). Moreover, the usage amount of the phenolic compound can be 20 phr to 25 phr.

According to the aforementioned manufacturing method of the aminolyzable benzoxazine resin cured product, wherein the phenolic compound can be bisphenol A or a phenolic resin.

According to the aforementioned manufacturing method of the aminolyzable benzoxazine resin cured product, wherein the curing temperature can be 180°C to 200°C.

According to the aforementioned manufacturing method of the aminolyzable benzoxazine resin cured product, wherein the resin composition can further include an epoxy resin, and an equivalent ratio of the epoxy resin and the benzoxazine resin can be not greater than 1. Moreover, the equivalent ratio of the epoxy resin and the benzoxazine resin can be not greater than 0.7.

According to another embodiment of the present disclosure, an aminolyzable benzoxazine resin cured product is manufactured by the aforementioned manufacturing method of the aminolyzable benzoxazine resin cured product, wherein the aminolyzable benzoxazine resin cured product includes a phenoxy structure.

According to one another embodiment of the present disclosure, an aminolysis method of the aforementioned aminolyzable benzoxazine resin cured product includes steps as follows: performing a pre-decomposition mixing step and performing a heating step. **In** the pre-decomposition mixing step, the aminolyzable benzoxazine resin cured product is mixed with an aliphatic amine compound, so as to obtain a mixture to be aminolyzed. **In** the heating step, the mixture to be aminolyzed is heated, so as to make the aminolyzable benzoxazine resin cured product in the mixture to be aminolyzed be decomposed.

According to the aforementioned method, wherein in the heating step, the mixture to be aminolyzed is heated at an aminolysis temperature, and the aminolysis temperature can be 100°C to 200°C. Moreover, the aminolysis temperature can be 130°C to 150°C.

According to the aforementioned method, wherein the aliphatic amine compound can be triethylenetetramine.

According to the aforementioned method, wherein a weight of the aliphatic amine compound can be more than 2 times of a weight of the aminolyzable benzoxazine resin cured product. Moreover, the weight of the aliphatic amine compound can be 2 times to 10 times of the weight of the aminolyzable benzoxazine resin cured product.

### BRIEF DESCRIPTION OF THE DRAWINGS

In order to make the above and other objects, features, advantages and examples of the present disclosure more obvious and understandable, the accompanying drawings are described as follows:
Fig. 1 is a step flow chart of a manufacturing method of an aminolyzable benzoxazine resin cured product according to the present disclosure; and
Fig. 2 is a step flow chart of an aminolysis method of an aminolyzable benzoxazine resin cured product according to the present disclosure.

### [DENOTATION OF MAIN REFERENCE NUMERALS]

100:manufacturing method of aminolyzable benzoxazine resin cured product
200:aminolysis method of aminolyzable benzoxazine resin cured product
110,120,210,220:step

### DETAILED DESCRIPTION

The present disclosure will be further exemplified by the following specific embodiments. However, the embodiments can be applied to various inventive concepts and can be embodied in various specific ranges. **The** specific embodiments are only for the purposes of description, and are not limited to these practical details thereof.

**In** the present disclosure, the compound structure can be represented by a skeleton formula, and the representation can omit carbon atoms, hydrogen atoms and carbon-hydrogen bonds. If the functional groups are clearly identified in a structural formula, the identified structural formula should be followed.

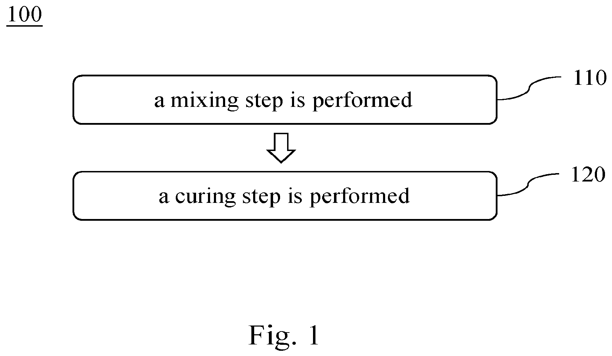

Please refer to Fig. 1. Fig. 1 is a step flow chart of a manufacturing method of an aminolyzable benzoxazine resin cured product 100 according to the present disclosure. The manufacturing method of the aminolyzable benzoxazine resin cured product 100 is provided in an embodiment of the present disclosure, which includes Step 110 and Step 120.

Step 110 is performing a mixing step by melting and uniformly mixing a benzoxazine resin and a phenolic compound, so as to obtain a resin composition, wherein the phenolic compound is configured for promoting the curing of the benzoxazine resin.

Step 120 is performing a curing step by heating the resin composition to a curing temperature to form an aminolyzable benzoxazine resin cured product, wherein the curing temperature is 160°C to 230°C.

Specifically, compared to conventional phenolic resins, the crosslinking behavior of the benzoxazine resin during curing is affected by the curing temperature. When the curing temperature is relatively low, the six-membered heterocyclic ring in the benzoxazine resin undergoes ring-opening crosslinking to form a phenoxy structure. The Mannich bridge structure in the phenoxy structure is similar to the Mannich bridge structure in the six-membered heterocyclic ring of the benzoxazine resin before curing. However, the carbon-oxygen bond of the Mannich bridge structure in the phenoxy structure is not stable and is prone to structural rearrangement at high temperatures, causing the lone pair of electrons on the oxygen atom to resonate to the ortho-position for crosslinking, and finally forming a relatively stable phenolic structure.

On the other hand, the carbon atom of the Mannich bridge structure of the benzoxazine resin can undergo a nucleophilic addition reaction with primary amine compounds. Therefore, the aforementioned characteristics are utilized in the present disclosure. The benzoxazine resin is mixed with the phenolic compound, and the ring-opening polymerization is performed at a relatively low curing temperature. The final aminolyzable benzoxazine resin cured product has a relatively large number of phenoxy structures. Because the phenoxy structures have similar properties to the six-membered heterocyclic ring of the benzoxazine resin, the aminolyzable benzoxazine resin cured product of the present disclosure can be degraded by amine compounds. Therefore, compared with conventional benzoxazine resin cured products, the degradability of the aminolyzable benzoxazine resin cured product of the present disclosure is significantly improved.

The phenolic compound can be, but not limited to, bisphenol A or a phenolic resin. A usage amount of the phenolic compound can be greater than or equal to 20 phr to promote the ring-opening reaction of the benzoxazine resin, which is favorable for increasing the degree of crosslinking of the benzoxazine resin and forming more phenoxy structures. Furthermore, the usage amount of the phenolic compound can be 20 phr to 25 phr to appropriately control the degree of crosslinking of the benzoxazine resin. It should be mentioned that, the present disclosure can use only the phenolic compound to promote the crosslinking reaction of the benzoxazine resin, that is, no other promoter (such as aldehyde or amine) is added, so as to ensure that the manufactured aminolyzable benzoxazine resin cured product has a specific chemical structure and has excellent physical and chemical properties and degradability.

The curing temperature can be 180°C to 200°C. At this curing temperature, the curing reaction of the benzoxazine resin is more complete, which is favorable for improving the material properties of the benzoxazine resin cured product. The relationship between the curing temperature and the degree of curing of the benzoxazine resin will be explained in detail in the subsequent experiments, and the details thereof will not be given herein.

In addition, the aforementioned resin composition can further include an epoxy resin, and an adding amount of the epoxy resin can be controlled by adjusting an equivalent ratio of the epoxy resin and the benzoxazine resin. The calculation method of the equivalent ratio is: equivalent value of the epoxy resin/equivalent value of the benzoxazine resin. Specifically, in the manufacturing method of the aminolyzable benzoxazine resin cured product of the present disclosure, the epoxy resin can be added or not added when mixing the benzoxazine resin and the phenolic compound. When the aforementioned equivalent ratio is 0, it means that no epoxy resin is added to the aminolyzable benzoxazine resin cured product. When the aforementioned equivalent ratio is between 0 and 1, it means that the epoxy resin is added to the aminolyzable benzoxazine resin cured product. When the aforementioned equivalent ratio is 1, it means that the equivalent ratio of the epoxy resin and the benzoxazine resin in the aminolyzable benzoxazine resin cured product is 1:1.

The equivalent ratio of the epoxy resin and the benzoxazine resin can be not greater than 1. By adding the epoxy resin, the material properties of the benzoxazine resin cured product can be adjusted, and the manufacturing cost can be simultaneously reduced. Furthermore, the equivalent ratio of the epoxy resin and the benzoxazine resin can be not greater than 0.7, so as to control the proportion of the epoxy resin to retain the excellent degradation properties of the benzoxazine resin cured product.

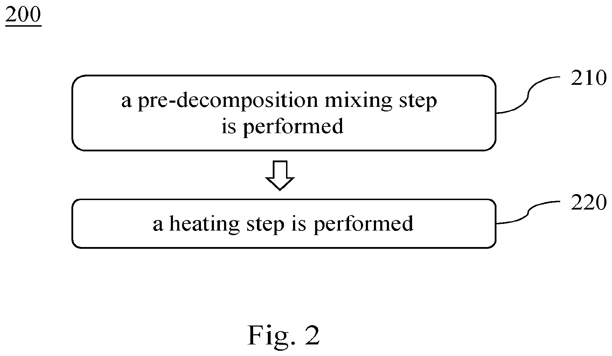

Please refer to Fig. 2. Fig. 2 is a step flow chart of an aminolysis method of an aminolyzable benzoxazine resin cured product 200 according to the present disclosure. The aminolysis method of the aforementioned aminolyzable benzoxazine resin cured product 200 is provided in another embodiment of the present disclosure, which includes Step 210 and Step 220.

Step 210 is performing a pre-decomposition mixing step by mixing the aminolyzable benzoxazine resin cured product with an aliphatic amine compound, so as to obtain a mixture to be aminolyzed. **The** aliphatic amine compound can be triethylenetetramine (TETA), and a weight of the aliphatic amine compound can be more than 2 times of a weight of the aminolyzable benzoxazine resin cured product to ensure good degradation effect of the benzoxazine resin cured product. Moreover, the weight of the aliphatic amine compound can be 2 times to 10 times of the weight of the aminolyzable benzoxazine resin cured product, so as to avoid excessive residual of the aliphatic amine compound which affects the subsequent processing.

Step 220 is performing a heating step by heating the mixture to be aminolyzed, so as to make the aminolyzable benzoxazine resin cured product in the mixture to be aminolyzed be decomposed. **It** should be noticed that, the aminolyzable benzoxazine resin cured product of the present disclosure has a plurality of phenoxy structures which can be taken as aminolysis breakpoints, and the aminolysis reaction shown in the following chemical equation is performed:

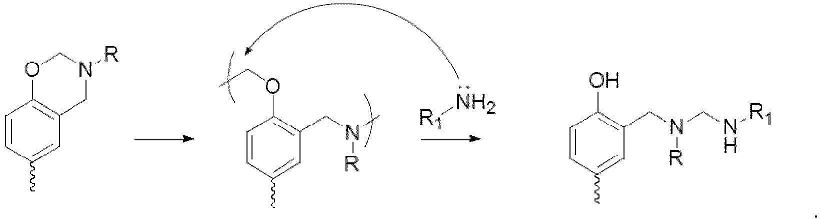

Specifically, in the heating step, the mixture to be aminolyzed is heated at an aminolysis temperature, and the aminolysis temperature can be 100°C to 200°C to provide sufficient reaction energy. Moreover, the aminolysis temperature can be 130°C to 150°C, so as to further promote the aminolysis reaction.

The present disclosure will be further exemplified by the following specific embodiments so as to facilitate utilizing and practicing the present disclosure completely by the people skilled in the art without over-interpreting and over-experimenting. However, the readers should understand that the present disclosure should not be limited to these practical details thereof, that is, these practical details are used to describe how to implement the materials and methods of the present disclosure and are not necessary.

### <Example 1>

2 grams (0.0092 eq) of diaminodiphenyl ether type benzoxazine resin (trade name of PF3500 of Chang Chun Plastics Co., Ltd.), 0.86 grams (0.0018 eq) of bisphenol A type chain extender epoxy resin (KP-158, a self-made epoxy resin of Swancor Highpolymer Co., Ltd., with an epoxy equivalent weight of 470 g/eq) and 20 phr of bisphenol A were melted and mixed uniformly to obtain a resin composition. **Then,** the aforementioned resin composition was coated on a metal aluminum plate, placed in an oven and heated to 150°C for a period of time, and then the temperature was gradually increased to 180°C to complete the crosslinking reaction. Finally, a film of an aminolyzable benzoxazine resin cured product was obtained.

**It** should be mentioned that, the benzoxazine resin and the phenolic compound will undergo the crosslinking reaction at 150°C. Any person skilled in the art can freely select an appropriate reaction time according to the content of the benzoxazine resin, the content of the phenolic compound and the equipment used at the temperature disclosed in the present disclosure, so that the benzoxazine resin and the phenolic compound can react completely to obtain the aminolyzable benzoxazine resin cured product of the present disclosure.

### <Example 2>

2 grams (0.0092 eq) of diaminodiphenyl ether type benzoxazine resin (trade name of PF3500 of Chang Chun Plastics Co., Ltd.), 0.86 grams (0.0018 eq) of bisphenol A type chain extender epoxy resin (KP-158, a self-made epoxy resin of Swancor Highpolymer Co., Ltd.) and 20 phr of phenolic resin (PN) were melted and mixed uniformly to obtain a resin composition. Then, the aforementioned resin composition was coated on a metal aluminum plate, placed in an oven and heated to 150°C for a period of time, and then the temperature was gradually increased to 180°C to complete the crosslinking reaction. Finally, a film of an aminolyzable benzoxazine resin cured product was obtained.

### <Example 3>

The amount of bisphenol A type chain extender epoxy resin in the resin composition of Example 2 was adjusted to 1.07 grams (0.0023 eq), and the other components and steps were the same as those in Example 2.

### <Example 4>

The amount of bisphenol A type chain extender epoxy resin in the resin composition of Example 2 was adjusted to 1.23 grams (0.0026 eq), and the other components and steps were the same as those in Example 2.

### <Example 5>

The final temperature of the gradually increased temperature in Example 2 was adjusted to 200°C, and the other components and steps were the same as those in Example 2.

### <Example 6>

1.5 grams (0.0069 eq) of diaminodiphenyl ether type benzoxazine resin (trade name of PF3500 of Chang Chun Plastics Co., Ltd.), 0.42 grams (0.0023 eq) of bisphenol A type epoxy resin (trade name of BE188 of Chang Chun Plastics Co., Ltd.) and 20 phr of bisphenol A were melted and mixed uniformly to obtain a resin composition. Then, the aforementioned resin composition was coated on a metal aluminum plate, placed in an oven and heated to 150°C for a period of time, and then the temperature was gradually increased to 180°C to complete the crosslinking reaction. Finally, a film of an aminolyzable benzoxazine resin cured product was obtained.

### <Example 7>

The amount of diaminodiphenyl ether type benzoxazine resin in the resin composition of Example 6 was adjusted to 2 grams (0.0092 eq) and the amount of bisphenol A type epoxy resin therein was adjusted to 0.84 grams (0.0046 eq), and the other components and steps were the same as those in Example 6.

### <Example 8>

The amount of diaminodiphenyl ether type benzoxazine resin in the resin composition of Example 6 was adjusted to 2 grams (0.0092 eq) and the amount of bisphenol A type epoxy resin therein was adjusted to 1.13 grams (0.0061 eq), and the other components and steps were the same as those in Example 6.

### <Example 9>

The final temperature of the gradually increased temperature in Example 6 was adjusted to 200°C, and the other components and steps were the same as those in Example 6.

### <Example 10>

1.5 grams (0.0069 eq) of diaminodiphenyl ether type benzoxazine resin (trade name of PF3500 of Chang Chun Plastics Co., Ltd.), 0.42 grams (0.0023 eq) of bisphenol A type epoxy resin (trade name of BE188 of Chang Chun Plastics Co., Ltd.) and 20 phr of phenolic resin (PN) were melted and mixed uniformly to obtain a resin composition. Then, the aforementioned resin composition was coated on a metal aluminum plate, placed in an oven and heated to 150°C for a period of time, and then the temperature was gradually increased to 180°C to complete the crosslinking reaction. Finally, a film of an aminolyzable benzoxazine resin cured product was obtained.

### <Example 11>

The amount of diaminodiphenyl ether type benzoxazine resin in the resin composition of Example 10 was adjusted to 2 grams (0.0092 eq) and the amount of bisphenol A type epoxy resin therein was adjusted to 0.84 grams (0.0046 eq), and the other components and steps were the same as those in Example 10.

### <Example 12>

The amount of diaminodiphenyl ether type benzoxazine resin in the resin composition of Example 10 was adjusted to 2 grams (0.0092 eq) and the amount of bisphenol A type epoxy resin therein was adjusted to 1.13 grams (0.0061 eq), and the other components and steps were the same as those in Example 10.

### <Example 13>

The final temperature of the gradually increased temperature in Example 10 was adjusted to 200°C, and the other components and steps were the same as those in Example 10.

### <Example 14>

3 grams (0.0137 eq) of diaminodiphenyl ether type benzoxazine resin (trade name of PF3500 of Chang Chun Plastics Co., Ltd.) and 20 phr of bisphenol A were melted and mixed uniformly to obtain a resin composition. Then, the aforementioned resin composition was coated on a metal aluminum plate, placed in an oven and heated to 150°C for a period of time, and then the temperature was gradually increased to 180°C to complete the crosslinking reaction. Finally, a film of an aminolyzable benzoxazine resin cured product was obtained.

### <Example 15>

3 grams (0.0137 eq) of diaminodiphenyl ether type benzoxazine resin (trade name of PF3500 of Chang Chun Plastics Co., Ltd.) and 20 phr of phenolic resin (PN) were melted and mixed uniformly to obtain a resin composition. Then, the aforementioned resin composition was coated on a metal aluminum plate, placed in an oven and heated to 150°C for a period of time, and then the temperature was gradually increased to 200°C to complete the crosslinking reaction. Finally, a film of an aminolyzable benzoxazine resin cured product was obtained.

### <Comparative Example 1>

2 grams (0.0092 eq) of diaminodiphenyl ether type benzoxazine resin (trade name of PF3500 of Chang Chun Plastics Co., Ltd.), 0.86 grams (0.0018 eq) of bisphenol A type chain extender epoxy resin (KP-158, a self-made epoxy resin of Swancor Highpolymer Co., Ltd.) and 2 phr of bisphenol A were melted and mixed uniformly to obtain a resin composition. Then, the aforementioned resin composition was coated on a metal aluminum plate, placed in an oven and heated to 120°C for a period of time, and then the temperature was gradually increased to 150°C to complete the crosslinking reaction and form a film.

### <Comparative Example 2>

The amount of bisphenol A in the resin composition of Comparative Example 1 was adjusted to 5 phr, and the other components and steps were the same as those in Comparative Example 1.

### <Comparative Example 3>

The amount of bisphenol A in the resin composition of Comparative Example 1 was adjusted to 10 phr, and the other components and steps were the same as those in Comparative Example 1.

### <Comparative Example 4>

The amount of bisphenol A in the resin composition of Comparative Example 1 was adjusted to 15 phr, and the other components and steps were the same as those in Comparative Example 1.

### <Comparative Example 5>

The amount of bisphenol A in the resin composition of Comparative Example 1 was adjusted to 20 phr, and the other components and steps were the same as those in Comparative Example 1.

### <Comparative Example 6>

2 grams (0.0092 eq) of diaminodiphenyl ether type benzoxazine resin (trade name of PF3500 of Chang Chun Plastics Co., Ltd.), 0.86 grams (0.0018 eq) of bisphenol A type chain extender epoxy resin (KP-158, a self-made epoxy resin of Swancor Highpolymer Co., Ltd.) and 20 phr of phenolic resin (PN) were melted and mixed uniformly to obtain a resin composition. Then, the aforementioned resin composition was coated on a metal aluminum plate, placed in an oven and heated to 120°C for a period of time, and then the temperature was gradually increased to 150°C to complete the crosslinking reaction and form a film.

### <Comparative Example 7>

1.5 grams (0.0069 eq) of diaminodiphenyl ether type benzoxazine resin (trade name of PF3500 of Chang Chun Plastics Co., Ltd.), 0.42 grams (0.0023 eq) of bisphenol A type epoxy resin (trade name of BE188 of Chang Chun Plastics Co., Ltd.) and 20 phr of bisphenol A were melted and mixed uniformly to obtain a resin composition. Then, the aforementioned resin composition was coated on a metal aluminum plate, placed in an oven and heated to 120°C for a period of time, and then the temperature was gradually increased to 150°C to complete the crosslinking reaction and form a film.

### <Comparative Example 8>

1.5 grams (0.0069 eq) of diaminodiphenyl ether type benzoxazine resin (trade name of PF3500 of Chang Chun Plastics Co., Ltd.), 0.42 grams (0.0023 eq) of bisphenol A type epoxy resin (trade name of BE188 of Chang Chun Plastics Co., Ltd.) and 20 phr of phenolic resin (PN) were melted and mixed uniformly to obtain a resin composition. Then, the aforementioned resin composition was coated on a metal aluminum plate, placed in an oven and heated to 120°C for a period of time, and then the temperature was gradually increased to 150°C to complete the crosslinking reaction and form a film.

### <Comparative Example 9>

3 grams (0.0137 eq) of diaminodiphenyl ether type benzoxazine resin (trade name of PF3500 of Chang Chun Plastics Co., Ltd.) was melted and coated on a metal aluminum plate, placed in an oven and heated to 150°C for a period of time, and then the temperature was gradually increased to 180°C to complete the crosslinking reaction and form a film.

### <Comparative Example 10>

2 grams (0.0092 eq) of diaminodiphenyl ether type benzoxazine resin (trade name of PF3500 of Chang Chun Plastics Co., Ltd.) and 0.86 grams (0.0018 eq) of bisphenol A type chain extender epoxy resin (KP-158, a self-made epoxy resin of Swancor Highpolymer Co., Ltd.) were melted and mixed uniformly to obtain a resin composition. Then, the aforementioned resin composition was coated on a metal aluminum plate, placed in an oven and heated to 150°C for a period of time, and then the temperature was gradually increased to 180°C to complete the crosslinking reaction and form a film.

### <Comparative Example 11>

1.5 grams (0.0069 eq) of diaminodiphenyl ether type benzoxazine resin (trade name of PF3500 of Chang Chun Plastics Co., Ltd.) and 0.42 grams (0.0023 eq) of bisphenol A type epoxy resin (trade name of BE188 of Chang Chun Plastics Co., Ltd.) were melted and mixed uniformly to obtain a resin composition. Then, the aforementioned resin composition was coated on a metal aluminum plate, placed in an oven and heated to 150°C for a period of time, and then the temperature was gradually increased to 180°C to complete the crosslinking reaction and form a film.

### <Comparative Example 12>

2 grams (0.0092 eq) of diaminodiphenyl ether type benzoxazine resin (trade name of PF3500 of Chang Chun Plastics Co., Ltd.), 1.13 grams (0.0061 eq) of bisphenol A type epoxy resin (trade name of BE188 of Chang Chun Plastics Co., Ltd.) and 20 phr of bisphenol A were melted and mixed uniformly to obtain a resin composition. Then, the aforementioned resin composition was coated on a metal aluminum plate, placed in an oven and heated to 150°C for a period of time, and then the temperature was gradually increased to 240°C to complete the crosslinking reaction and form a film.

### <Comparative Example 13>

2 grams (0.0092 eq) of diaminodiphenyl ether type benzoxazine resin (trade name of PF3500 of Chang Chun Plastics Co., Ltd.), 1.13 grams (0.0061 eq) of bisphenol A type epoxy resin (trade name of BE188 of Chang Chun Plastics Co., Ltd.) and 20 phr of phenolic resin (PN) were melted and mixed uniformly to obtain a resin composition. Then, the aforementioned resin composition was coated on a metal aluminum plate, placed in an oven and heated to 150°C for a period of time, and then the temperature was gradually increased to 240°C to complete the crosslinking reaction and form a film.

### <Physical Properties of Aminolyzable Benzoxazine Resin Cured Product>

The following experimental results are the glass transition temperature (T_{g}, °C) and the residual heat release (J/g) after curing of the aforementioned examples and comparative examples measured by differential scanning calorimeter (DSC). The heating rate during the measurement was 10°C/min, and the measurement results are listed in Table 1 below.

**Table 1**

| Table 1 - Glass Transition Temperature and Residual Heat Release after Curing | | | | | |
|---|---|---|---|---|---|
| | Glass Transition Temperature (°C) | Residual Heat Release (J/g) | | Glass Transition Temperature (°C) | Residual Heat Release (J/g) |
| Example 1 | 119.22 | 21.55 | Comparative Example 1 | 126.63 | 165.75 |
| Example 2 | 128.91 | 20.14 | Comparative Example 2 | N/A | 169.16 |
| Example 3 | 131.91 | 31.90 | Comparative Example 3 | 117.05 | 169.24 |
| Example 4 | 134.91 | 32.12 | Comparative Example 4 | N/A | 169.86 |
| Example 5 | 141.84 | 12.89 | Comparative Example 5 | N/A | 153.11 |
| Example 6 | 129.76 | 22.20 | Comparative Example 6 | N/A | 134.60 |
| Example 7 | 135.72 | 32.87 | Comparative Example 7 | 138.24 | 166.95 |
| Example 8 | 133.30 | 26.20 | Comparative Example 8 | 153.60 | 146.45 |
| Example 9 | 135.76 | 5.50 | Comparative Example 9 | 171.05 | 64.14 |
| Example 10 | 157.55 | 26.82 | Comparative Example 10 | 136.60 | 37.60 |
| Example 11 | 161.10 | 27.54 | Comparative Example 11 | 162.71 | 74.08 |
| Example 12 | 143.94 | 11.97 | Comparative Example 12 | 161.35 | 9.44 |
| Example 13 | 170.44 | 4.22 | Comparative Example 13 | 135.72 | 11.56 |
| Example 14 | 142.31 | 13.64 | | | |
| Example 15 | 164.09 | 2.78 | | | |

From Table 1, it can be understood that the glass transition temperature of the aminolyzable benzoxazine resin cured products manufactured in Example 1 to Example 13, which contain epoxy resin, can all reach above 115°C. Compared with Comparative Example 10 and Comparative Example 11 without the addition of phenolic compounds, the residual heat release after curing of Example 1 to Example 13 with the addition of phenolic compounds is significantly reduced (all less than 35 J/g). In addition, in Example 14 and Example 15 and Comparative Example 9 without epoxy resin, it can also be understood that the residual heat release after curing of Example 14 and Example 15 with the addition of phenolic compounds is much lower than that of Comparative Example 9 without the addition of phenolic compounds. It proves that the addition of phenolic compounds can promote the ring opening of epoxy resin and benzoxazine resin at 180°C and 200°C, which increases the degree of crosslinking.

Furthermore, in Comparative Example 5 to Comparative Example 8, the amount of added phenolic compound was fixed, and the curing temperature was reduced to 150°C. From the results in Table 1, it can be understood that the residual heat release after curing of Comparative Example 5 to Comparative Example 8 is higher than that of Example 1, Example 2, Example 6 and Example 10 with the curing temperature of 180°C and 200°C. It proves that at the curing temperature of 180°C and 200°C, the curing reaction can be more complete.

Furthermore, from the measurement results of Comparative Example 1 to Comparative Example 5, it can be understood that when the amount of phenolic compound is increased to 20 phr, the residual heat release after curing is significantly reduced. It indicates that the reactivity of the curing reaction is improved as the phenolic compound increases, and the amount of phenolic compound needs to reach a certain level to bring a significant improvement effect.

If the amount of phenolic compound is less than 20 phr, the ability thereof to catalyze the ring opening of benzoxazine resin and epoxy resin is relatively poor, which causes the overall crosslinking degree of the resin composition to decrease, resulting in excessive residual heat release. If it is used on PCB, it will affect the subsequent processing. If the amount of phenolic compound is higher than 25 phr, because the molecules of the phenolic compound are relatively small, the molecules will affect the arrangement of polymers after being introduced. It results in a decrease in the overall heat resistance of the cured product, which causes a decrease in the glass transition temperature and degradation effect of the cured product.

### <Degradation Ability of Aminolyzable Benzoxazine Resin Cured Product>

The following experimental results were obtained by immersing the films manufactured in the aforementioned examples and comparative examples in triethylenetetramine and then heating in an oven of 135°C for 1.5 hours, and observing the changes in the films to evaluate the degradation ability thereof. The observation results are listed in Table 2 below.

**Table 2**

| Table 2 - Degradation Results | | | |
|---|---|---|---|
| | Degradation Results | | Degradation Results |
| Example 1 | Completely Dissolved | Comparative Example 1 | N/A |
| Example 2 | Fragments | Comparative Example 2 | N/A |
| Example 3 | Strengthless Fragments | Comparative Example 3 | N/A |
| Example 4 | Strengthless Fragments | Comparative Example 4 | N/A |
| Example 5 | Fragments | Comparative Example 5 | N/A |
| Example 6 | Fragments | Comparative Example 6 | N/A |
| Example 7 | Mushy Gel Pieces | Comparative Example 7 | N/A |
| Example 8 | Mushy Gel Pieces | Comparative Example 8 | N/A |
| Example 9 | Fragments | Comparative Example 9 | Completely Dissolved |
| Example 10 | Completely Dissolved | Comparative Example 10 | Completely Dissolved |
| Example 11 | Small Gel Pieces | Comparative Example 11 | Fragments, Mushy |
| Example 12 | Small Gel Pieces | Comparative Example 12 | Large Fragments with Strength |
| Example 13 | Small Fragments | Comparative Example 13 | Large Fragments with Strength |
| Example 14 | Completely Dissolved | | |
| Example 15 | Gels | | |

It should be mentioned that, the residual heat release after curing of Comparative Example 1 to Comparative Example 8 obtained in the previous experiment was too high, which indicates that the curing reaction thereof was not complete, so the degradation ability of Comparative Example 1 to Comparative Example 8 is not discussed herein.

From Table 2, it can be understood that Example 1 to Example 15 with the curing temperature of 180°C and 200°C can all be degraded by the method of the present disclosure, and Example 1, Example 10 and Example 14 are all completely dissolved. The remaining examples formed strengthless small fragments or gel pieces after degradation. In contrast, although Comparative Example 9 to Comparative Example 11 have degradation ability, phenolic compounds were not added therein, resulting in the relatively large residual heat release after curing measured in the previous experiment (all greater than 35 J/g), which indicates that the degree of curing of Comparative Example 9 to Comparative Example 11 is relatively poor, which has certain limitations in application. On the other hand, Comparative Example 12 and Comparative Example 13 with the curing temperature of 240°C cannot be degraded into strengthless fragments, which indicates that the degradation effect thereof is poor.

From the aforementioned experimental results, it can be understood that the degradation ability of the cured product is related to the crosslinking mechanism of benzoxazine resin at different temperatures. The Mannich-type phenoxy structure formed by crosslinking at relatively low temperatures (curing temperature of 180°C and 200°C) is more easily attacked by the lone pair electrons of primary amine compounds than the Mannich-type phenolic structure formed by crosslinking at high temperatures (curing temperature of 240°C), so the degradation effect can be achieved.

**In** summary, according to the aminolyzable benzoxazine resin cured product of the present disclosure, the relatively low curing temperature for curing is selected and the phenolic compound is simultaneously added to promote the curing reaction. **It** makes the manufactured benzoxazine resin cured product have good material properties and chemical degradability, which solves the problem of difficult recycling of benzoxazine resin cured products and achieves the goal of sustainable utilization.

The molding method of the aminolyzable benzoxazine resin cured product of the present disclosure is not limited to the method disclosed in the examples of the present disclosure, and pultrusion, thermoforming, injection molding or other molding methods can be adopted.

Although the present disclosure has been disclosed with reference to the aforementioned embodiments, the present disclosure is not limited thereto. Anyone skilled in the art can make various changes and modifications without departing from the spirit and scope of the present disclosure. Therefore, the scope of the present disclosure should be determined by the scope of the following claims.

## Claims

1. A manufacturing method of an aminolyzable benzoxazine resin cured product, **characterizing in** comprising:
performing a mixing step by melting and uniformly mixing a benzoxazine resin and a phenolic compound, so as to obtain a resin composition, wherein the phenolic compound is configured for promoting the curing of the benzoxazine resin; and
performing a curing step by heating the resin composition to a curing temperature to form an aminolyzable benzoxazine resin cured product, wherein the curing temperature is 160°C to 230°C.

2. The manufacturing method of the aminolyzable benzoxazine resin cured product of claim 1, **characterized in that**, a usage amount of the phenolic compound is greater than or equals to 20 phr.

3. The manufacturing method of the aminolyzable benzoxazine resin cured product of claim 2, **characterized in that**, the usage amount of the phenolic compound is 20 phr to 25 phr.

4. The manufacturing method of the aminolyzable benzoxazine resin cured product of claim 1, **characterized in that**, the phenolic compound is bisphenol A or a phenolic resin.

5. The manufacturing method of the aminolyzable benzoxazine resin cured product of claim 1, **characterized in that**, the curing temperature is 180°C to 200°C.

6. The manufacturing method of the aminolyzable benzoxazine resin cured product of any one of claim 1 to claim 5, **characterized in that**, the resin composition further comprises an epoxy resin, and an equivalent ratio of the epoxy resin and the benzoxazine resin is not greater than 1.

7. The manufacturing method of the aminolyzable benzoxazine resin cured product of claim 6, **characterized in that**, the equivalent ratio of the epoxy resin and the benzoxazine resin is not greater than 0.7.

8. An aminolyzable benzoxazine resin cured product, **characterized in that**, the aminolyzable benzoxazine resin cured product is manufactured by the manufacturing method of the aminolyzable benzoxazine resin cured product of any one of claim 1 to claim 5, wherein the aminolyzable benzoxazine resin cured product comprises a phenoxy structure.

9. An aminolyzable benzoxazine resin cured product, **characterized in that**, the aminolyzable benzoxazine resin cured product is manufactured by the manufacturing method of the aminolyzable benzoxazine resin cured product of claim 6, wherein the aminolyzable benzoxazine resin cured product comprises a phenoxy structure.

10. An aminolyzable benzoxazine resin cured product, **characterized in that**, the aminolyzable benzoxazine resin cured product is manufactured by the manufacturing method of the aminolyzable benzoxazine resin cured product of claim 7, wherein the aminolyzable benzoxazine resin cured product comprises a phenoxy structure.

11. An aminolysis method of the aminolyzable benzoxazine resin cured product of claim 8, **characterized in** comprising:
performing a pre-decomposition mixing step by mixing the aminolyzable benzoxazine resin cured product with an aliphatic amine compound, so as to obtain a mixture to be aminolyzed; and
performing a heating step by heating the mixture to be aminolyzed, so as to make the aminolyzable benzoxazine resin cured product in the mixture to be aminolyzed be decomposed.

12. The method of claim 11, **characterized in that**, in the heating step, the mixture to be aminolyzed is heated at an aminolysis temperature, and the aminolysis temperature is 100°C to 200°C.

13. The method of claim 12, **characterized in that**, the aminolysis temperature is 130°C to 150°C.

14. The method of claim 11, **characterized in that**, the aliphatic amine compound is triethylenetetramine.

15. The method of claim 11, **characterized in that**, a weight of the aliphatic amine compound is more than 2 times of a weight of the aminolyzable benzoxazine resin cured product.

16. The method of claim 15, **characterized in that**, the weight of the aliphatic amine compound is 2 times to 10 times of the weight of the aminolyzable benzoxazine resin cured product.
